# EUROPÄISCHE PATENTANMELDUNG

(11) **EP 2 711 685 A2**
(43) Veröffentlichungstag der Anmeldung: **26.03.2014**
(21) Anmeldenummer: 13185599.1
(22) Anmeldetag: 23.09.2013
(51) Int. Cl.: G01N 15/14, G01N 21/05

(54) **Detektionsvorrichtung sowie Verfahren zur automatischen Detektion von Partikeln**

(30) Priorität: 24.09.2012 DE 102012108989
(71) Anmelder: EADS Deutschland GmbH, 85521 Ottobrunn (DE)
(72) Erfinder: Heller, Christoph, 82024 Taufkirchen (DE)
(74) Vertreter: Flügel Preissner Kastel Schober

(57) **Zusammenfassung**

Die Erfindung betrifft eine Detektionsvorrichtung (10) zur automatischen Detektion von Partikeln (12), insbesondere biologischen Partikeln (12), in einer Probe (19), aufweisend eine Detektionseinrichtung (14) zum Erfassen der Partikel (12) und eine Fluidikeinrichtung (16) zum automatischen Leiten der Probe (19) zu der Detektionseinrichtung (14), wobei die Fluidikeinrichtung (16) eine Aufbereitungseinrichtung (18) zur automatischen Aufbereitung der Partikel (12) zwecks Detektion aufweist und wobei die Detektionseinrichtung (14) ein Durchflusszytometer (56) zum Erfassen wenigstens eines physikalischen Parameters der aufbereiteten Partikel (12) aufweist. Weiter betrifft die Erfindung ein Verfahren zur automatischen Detektion von Partikeln (12).

## Beschreibung

Die Erfindung betrifft eine Detektionsvorrichtung sowie ein Verfahren zur automatischen Detektion von Partikeln, insbesondere von biologischen Partikeln.

Nachweise von beispielsweise Bakterien oder anderen biologischen Partikeln in flüssigen Medien werden routinemäßig in der Qualitätskontrolle von beispielsweise Trinkwasser, Grundwasser oder auch Badegewässern eingesetzt. Durch die flächendeckende Einführung solcher routinemäßiger Qualitätskontrollen kann die Ausbreitung von beispielsweise Seuchen über das Wasser wirkungsvoll verhindert werden.

Übliche Verfahren zum Nachweis von biologischen Partikeln sind beispielsweise Kultivierungsmethoden, bei denen zum Beispiel Wasserproben mit geeigneten Medien inkubiert werden, um nach Inkubation die Art und Konzentration von Partikeln in der Probe bestimmen zu können.

Solche bekannten Kultivierungsmethoden haben jedoch eine Reihe von Nachteilen, da sie insbesondere eine lange Inkubationszeit von wenigstens 24 Stunden benötigen und viele manuelle Schritte zur Aufbereitung der Proben und Inkubationsmedien nötig sind, die ein erfahrenes Personal und eine spezielle Infrastruktur wie beispielsweise ein Labor erforderlich machen. Zusätzlich sind Unsicherheitsfaktoren durch beispielsweise manuelle Auszählung diesen Methoden immanent.

Daher ist es gewünscht, alternative Vorrichtungen und Verfahren bereitzustellen, mit denen ein schnellerer und sichererer Nachweis von biologischen Partikeln in Proben möglich ist. Insbesondere sind Vorrichtungen und Verfahren gewünscht, die die Nachweise automatisch, d.h. weitgehend ohne Einsatz von geschultem Personal und auch außerhalb von spezialisierten Laboren, durchführen können.

Beispiele für solche Verfahren als Alternative zu den bekannten Kultivierungsmethoden sind in DE 10 2007 021 387 A1, in DE 10 2008 035 771 B4, DE 10 2008 035 770 A1, DE 10 2009 048 811 A1 und DE 10 2009 048 790 A1 offenbart. Bei den genannten Beispielen werden die biologischen Partikeln in automatischen Verfahren auf Filtermaterialien aufkonzentriert und über automatisierte mikroskopische Vorrichtungen auf dem Filtermaterial erfasst.

Der Erfindung liegt die Aufgabe zu Grunde, eine Alternative zu den genannten Beispielen vorzuschlagen, mit der biologische Partikel ohne Verwendung eines Filters automatisch nachgewiesen und insbesondere bezüglich ihrer Konzentration erfasst werden können.

Diese Aufgabe wird mit einer Detektionsvorrichtung mit der Merkmalskombination des Anspruchs 1 gelöst.

Ein Verfahren zur automatischen Detektion von Partikeln, insbesondere biologischen Partikeln, ist Gegenstand des Nebenanspruches.

Vorteilhafte Ausgestaltungen der Erfindung sind Gegenstand der Unteransprüche.

Eine Detektionsvorrichtung zur automatischen Detektion von Partikeln, insbesondere biologischen Partikeln, in einer Probe, weist eine Detektionseinrichtung zum Erfassen der Partikel und eine Fluidikeinrichtung zum automatischen Leiten der Probe zu der Detektionseinrichtung auf. Die Fluidikeinrichtung umfasst eine Aufbereitungseinrichtung zur automatischen Aufbereitung der Partikel zwecks Detektion und die Detektionseinrichtung umfasst ein Durchflusszytometer zum Erfassen wenigstens eines physikalischen Parameters der aufbereiteten Partikel.

In einem Durchflusszytometer werden Partikel nicht auf einem Filtermaterial aufkonzentriert, sondern einzeln durch Messung von physikalischen Parametern der Partikel erfasst, so dass sowohl eine Bestimmung bezüglich der Art des erfassten Partikels als auch bezüglich der Anzahl der Partikel in der gemessenen Probe ermöglicht wird. Sind genügend detektierbare Partikel in der Probe enthalten, kann auf die Aufkonzentration der Probe vor Detektion unter Verwendung eines Filtermaterials verzichtet werden. Dadurch Entfallen auch Schritte zum Bereitstellen von sauberen Filtermaterialien wie Reinigungs- oder Austauschschritte. Somit ist eine automatische Detektion der Partikel vereinfacht.

Allerdings wurden bislang die Proben, die in einem Durchflusszytometer erfasst werden sollen, zuvor manuell aufbereitet und auch manuell dem Detektionsbereich des Durchflusszytometers zugeführt.

Daher wird nun eine automatische Fluidikeinrichtung bereitgestellt, die automatisch eine Probe zu der Detektionseinrichtung leitet. Gleichzeitig ermöglicht die Fluidikeinrichtung auch eine automatische Aufbereitung der in der Probe vorhandenen Partikel, sodass diese in der Detektionseinrichtung detektiert werden können. Somit ist es nun möglich, die Erfassung der in der Probe vorhandenen Partikel nach Art und Konzentration automatisch unter Verwendung eines Durchflusszytometers durchzuführen.

Es muss somit kein geschultes Personal vorgesehen werden, das manuell die Probe aufbereitet und dem Detektionsbereich des Durchflusszytometers zuführt, da beide Aufgaben durch die Fluidikeinrichtung übernommen werden.

Vorzugsweise weist die Aufbereitungseinrichtung eine Mischeinrichtung zum automatischen Mischen der Probe mit wenigstens einem Reaktionsfluid auf.

In der Mischeinrichtung kann dann vorteilhaft die Probe bzw. die darin enthaltenen Partikel mit dem Reaktionsfluid zur Reaktion gebracht werden, um die Partikel vorzugsweise in dem Durchflusszytometer detektierbar zu machen.

Weiter vorteilhaft weist die Aufbereitungseinrichtung wenigstens ein Reservoir zur Lagerung des Reaktionsfluids auf.

So kann das Reaktionsfluid, das zur Aufbereitung der Partikel in der Probe benötigt wird, vorzugsweise direkt in der Detektionsvorrichtung gelagert werden, so dass vorteilhaft automatisch darauf zugegriffen werden kann.

Besonders bevorzugt weist die Aufbereitungseinrichtung auch eine Probenaufnahmevorrichtung zur automatischen Aufnahme der Probe auf.

Somit ist es vorteilhaft auch möglich, automatisch eine Probe aufzunehmen und in die Mischeinrichtung zu überführen, so dass vorzugsweise kein Personal zur Probennahme benötigt wird.

Bevorzugt weist die Aufbereitungseinrichtung ein Abfallgefäß zur Aufnahme von Abfallfluid auf.

Somit ist es möglich, beispielsweise nicht mehr benötigtes Reaktionsfluid aus der Mischeinrichtung direkt in das vorteilhafte Abfallgefäß zu entsorgen, so dass die Mischeinrichtung vorteilhaft für beispielsweise weitere Aufbereitungsschritte zur Verfügung steht.

Vorzugsweise ist die Mischeinrichtung als Pumpeinrichtung, insbesondere als kontinuierliche Pumpeinrichtung, zum Pumpen, insbesondere kontinuierlichen Pumpen, der Probe und/oder des Reaktionsfluids und/oder einer Mischung aus Probe und Reaktionsfluid durch wenigstens einen Teilbereich der Fluidikeinrichtung ausgebildet.

Somit kann beispielsweise zur Aufnahme von Proben bzw. zur Weiterleitung einer aufbereiteten Probe zu der Detektionseinrichtung oder auch zum Leiten von nicht mehr benötigtem Reaktionsfluid zu dem Abfallgefäß vorteilhaft auf zusätzliche Pumpeinrichtungen verzichtet werden.

Vorzugsweise weist die Mischeinrichtung eine Heizeinrichtung zum Temperieren der Probe und/oder des Reaktionsfluids und/oder der Mischung aus Probe und Reaktionsfluid auf.

Damit kam vorteilhaft die Reaktion von Partikeln in der Probe mit dem Reaktionsfluid gefördert oder sogar erst ermöglicht werden.

In einer Ausgestaltung ist die Pumpeinrichtung als Kolbenspritze ausgebildet, wobei insbesondere ein Schneckengetriebe zum Antreiben des Kolbens vorgesehen ist.

Kolbenspritzen sind besonders einfach betätigbar, präzise in der Dosierung und kostengünstig erhältlich und können vorteilhaft sehr einfach bezüglich des zu handhabbaren Volumens gesteuert werden. Zusätzlich ist vorteilhaft eine Mischung von in der Kolbenspritze vorhandenen Fluiden durch Auf- und Abbewegen des Kolbens der Kolbenspritze möglich, so dass vorteilhaft auf weitere Einrichtungen, die eine Mischung von Fluiden herbeiführen, verzichtet werden kann.

Ein vorteilhaftes Schneckengetriebe, das den Kolben der Kolbenspritze antreibt, kann vorteilhaft gleichzeitig als Rückschlagventil wirken, um einem Überdruck von beispielsweise einer Leitung, aus der eine Probe zu entnehmen ist, entgegenzuwirken. So können vorteilhaft Druckminderer im Bereich der Probenaufnahmeeinrichtung vermieden werden.

In einer alternativen Ausgestaltung weist die Pumpeinrichtung wenigstens eine Peristaltikpumpe auf.

Peristaltikpumpen fördern Fluide durch kontinuierliche Rotation und gleichzeitiges Zusammenpressen und Wiederloslassen von beispielsweise Schlaucheinrichtungen. Da bei dieser Art der Fluidförderung üblicherweise zu jedem Zeitpunkt der Schlauch an mindestens einem Punkt zusammengepresst ist, kann sich ein möglicher Überdruck aus beispielsweise einer Leitung vorteilhaft nicht bis in die der Pumpe nachgeschalteten Elemente auswirken. So können vorteilhaft Druckminderer im Bereich der Probenaufnahmeeinrichtung vermieden werden.

Somit können der Mischeinrichtung vorteilhaft kontinuierlich Fluide wie beispielsweise Probenflüssigkeit oder Reaktionsfluid zugeführt werden und die abreagierte Mischung beispielsweise auch vorzugsweise kontinuierlich einer Detektionseinrichtung zugeführt werden. Damit ist vorzugsweise eine kontinuierliche Überwachung von beispielsweise Wasserleitungen möglich.

In bevorzugter Ausgestaltung weist das wenigstens eine Reservoir ein Reaktionsfluid auf, das gebildet ist durch ein Markerfluid, insbesondere ein Farbstofffluid, und/oder durch ein Sondenfluid, insbesondere ein Fluid mit Antikörpern und/oder Nukleinsäurefragmenten und/oder Enzymsubstraten.

Durch Verwendung von Markern können die Partikel vorteilhaft farblich markiert werden. Dabei ist es besonders vorteilhaft, wenn beispielsweise Farbstoffe verwendet werden, die erst nach Bindung an die Partikel aktiv werden und somit erfasst werden können. Dies sind beispielsweise sichtbare, fluoreszierende oder chemilumineszente Farbstoffe.

Alternativ oder auch zusätzlich können auch Sondenfluide verwendet werden, die Sonden aufweisen, welche mit den Partikeln vorzugsweise spezifisch reagieren. Beispiele für solche spezifischen Sonden sind unter anderem Antikörper, Nukleinsäurefragmente oder Enzymsubstrate.

Vorzugsweise weist die Fluidikeinrichtung wenigstens ein Mehrwegeventil zum automatischen Verbinden der Mischeinrichtung mit der Probenaufnahmeeinrichtung und/oder dem wenigstens einen Reservoir und/oder der Detektionseinrichtung und/oder dem Abfallgefäß auf.

Durch ein solches Mehrwegeventil ist es daher vorteilhaft möglich, die Mischeinrichtung beispielsweise zunächst mit der Probenaufnahmeeinrichtung und danach mit dem Reservoir, in dem das Reaktionsfluid gelagert ist, und danach mit der Detektionseinrichtung zu verbinden. Weiter kann die Mischeinrichtung auch vorteilhaft mit dem Abfallgefäß verbunden werden, um nicht mehr benötigtes Reaktionsfluid vorzugsweise aus der Mischeinrichtung zu entfernen, so dass vorteilhaft weitere Reaktionsschritte in der Mischeinrichtung durchgeführt werden können. Somit ist es durch Vorsehen eines Mehrwegeventiles vorteilhaft möglich, die Mischeinrichtung für verschiedene Aufgaben in der Detektionsvorrichtung zu verwenden.

Weiter vorteilhaft weist die Probenaufnahmeeinrichtung ein Umschaltventil zum automatischen Umschalten zwischen einer Probenaufnahmeposition und einer Detektionsposition auf.

Somit ist es möglich, auch vorteilhaft automatisch eine Probe beispielsweise aus einer Leitung zu entnehmen und so vorzugsweise in kontinuierlichen Abständen eine Überwachung von beispielsweise der Wasserqualität in einer Leitung durchzuführen.

Vorteilhaft weist die Detektionseinrichtung ein Detektionsgefäß, insbesondere eine trichterförmige Küvette, eine Anregungsquelle, insbesondere eine Lichtquelle, insbesondere einen Laser, und eine Detektoreinheit, insbesondere einen Photomultiplier, auf.

Durch das Vorsehen beispielsweise einer trichterförmigen Küvette, durch die die aufbereitete Probe geleitet wird, werden die darin angeordneten Partikel vorteilhaft vereinzelt, so dass physikalische Parameter der einzelnen Partikel vorzugsweise einzeln erfasst werden können.

Ein bevorzugtes Verfahren zur Erfassung von Partikeln sind optische Verfahren, weshalb es vorteilhaft ist, die aufbereiteten Partikel durch elektromagnetische Strahlung anzuregen, wobei auf der gegenüberliegenden Seite über eine Detektoreinheit vorzugsweise die Streuung bzw. Absorption des eingestrahlten Lichtes durch die Partikel erfasst wird.

Besonders bevorzugt weist die Fluidikeinrichtung einen Detektionseinrichtungsversorgungsbereich mit einem Hüllfluidreservoir und mit einer Zuleitung zum automatischen Leiten von Hüllfluid von dem Hüllfluidreservoir zu der Detektionseinrichtung auf, wobei die Zuleitung insbesondere eine Druckluftleitung und/oder eine Peristaltikpumpe aufweist.

In der Durchflusszytometrie wird die Vereinzelung der Partikel in einer Probe vorteilhaft dadurch unterstützt, dass an einem Wandbereich eines Detektionsgefäßes ein Fluid, ein so genanntes Hüllfluid, entlanggeleitet wird, so dass der Gesamtdurchmesser innerhalb des Detektionsgefäßes verringert wird. Strömt nun eine Probe zentral auf das Detektionsgefäß zu, wird ihr Strömungsdurchmesser nicht nur durch die Einströmung in das Detektionsgefäß, sondern auch durch die durch das Hüllfluid bedingte Verengung weiter verringert (sog. hydrodynamische Fokussierung), so dass die Partikel sich vorteilhaft in der Probe vereinzeln und somit vorteilhaft insbesondere einzeln die Detektionseinrichtung, beispielsweise gebildet aus Anregungsquelle und Detektoreinheit, passieren.

Wird dieses Hüllfluid nun vorzugsweise ebenfalls automatisch über die Fluidikeinrichtung zu dem Detektiongefäß geleitet, kann die Erfassung der Partikel automatisch durchgeführt werden, vorzugsweise ohne geschultes Personal zu benötigen.

Die Strömung des Hüllfluids durch das Detektionsgefäß kann beispielsweise durch Beaufschlagung von Druckluft, die das Hüllfluid in das Detektiongefäß presst, oder durch eine Peristaltikpumpe realisiert werden. Das verbrauchte Hüllfluid wird nach Durchströmen des Detektionsgefäßes vorzugsweise in einem Abfallgefäß aufgefangen.

Weiter vorteilhaft ist eine Recyclingeinrichtung zum Recyceln von Abfallfluid vorgesehen, die wenigstens einen Filter zum Filtern des Abfallfluids aufweist, wobei die Recyclingeinrichtung insbesondere als Verbindungsleitung zwischen Abfallgefäß und Detektionseinrichtung ausgebildet ist.

Somit kann beispielsweise das Abfallfluid, nachdem es in der Recyclingseinrichtung aufbereitet worden ist, vorteilhaft wieder als Hüllfluid wirken, wodurch eine wartungsfreie Zyklusdauer der Detektionsvorrichtung vorzugsweise erhöht werden kann.

Beispielsweise wird zum Aufbereiten des Abfallfluides ein Aktivkohlefilter verwendet, der zum Beispiel Sonden bzw. Marker aus dem Reaktionsfluid entfernen kann. Zusätzlich ist es vorteilhaft, einen Porenfilter mit Poren einer Porengröße zwischen 0,1 µm bis 0,3 µm vorzusehen, der in dem Abfallfluid vorhandene biologische Partikel vorzugsweise ausfiltern kann.

Vorzugsweise weist die Fluidikeinrichtung wenigstens ein Reservoir mit Reinigungslösung auf, so daß Fluidikeinrichtung und Detektionseinrichtung vorteilhaft automatisch gereinigt oder desinifiziert und zur Aufnahme einer neuen Probe vorbereitet werden können.

Vorzugsweise weist die Fluidikeinrichtung wenigstens ein Reservoir mit Kalibrierlösung auf, so dass die Detektionseinrichtung in bestimmten Abständen automatisch auf ihre einwandfreie Funktion hin überprüft werden kann. Die Kalibrierlösung besteht bevorzugt aus einem Gemisch fluoreszierender Latex- oder Polystyrolpartikel definierter Größe. Bevorzugte Größen sind Partikel mit einem Durchmesser von beispielsweise 0,2 µm, 0,5 µm, 0,75 µm, 1,0 µm, 1,5 µm und 2,0 µm.

Bevorzugt ist eine Steuereinrichtung zum automatischen Ansteuern der Elemente der Fluidikeinrichtung und/oder der Detektionseinrichtung vorgesehen.

Somit können die Fluidikeinrichtung bzw. die Detektionseinrichtung vorteilhaft automatisch bedient werden, ohne geschultes Personal zu benötigen, so dass beispielsweise eine vorteilhaft kontinuierliche oder zumindest in regelmäßigen Abständen automatisch gesteuerte Überwachung von beispielsweise einer Wasserleitung realisiert werden kann.

Vorteilhaft weist die Detektionsvorrichtung eine Auswerteeinrichtung zum Auswerten der in der Detektionseinrichtung erfassten physikalischen Parameter der Partikel auf.

Eine solche Auswerteeinrichtung kann beispielsweise nicht nur aus den gemessenen physikalischen Parametern die Art und Anzahl der in einer Probe vorhandenen Partikel bestimmen, sondern beispielsweise auch Alarmsignale ausgeben, wenn die Konzentration der Partikel einen Grenzwert übersteigt bzw. Partikel vorliegen, die eine Gefährdung für beispielsweise die Gesundheit darstellen.

In einer möglichen Ausgestaltung weist die Auswerteeinrichtung eine Mustererkennungseinheit zum Erkennen von Mustern von gegeneinander aufgetragenen gemessenen physikalischen Parametern auf, die insbesondere eine Speichereinheit zum Speichern von bekannten Mustern und eine Vergleichseinheit zum Vergleichen von bekannten und erkannten Mustern aufweist.

So ist es vorteilhaft nicht unbedingt nötig, eine exakte zahlenmäßige Erfassung der Partikel durchzuführen, sondern es kann vorteilhaft bereits anhand einer Änderung von bekannten Mustern erfasst werden, ob Verunreinigungen vorliegen. Dies ist beispielsweise bei einer kontinuierlichen regelmäßigen Untersuchung von Wasserleitungen möglich, da hier normalerweise im Idealfall Wasser mit konstanter Qualität durchgeleitet wird und eine Änderung einer solchen Wasserqualität vorteilhaft direkt durch Veränderung des Parametermusters erkannt werden kann.

Alternativ kann mit der Detektionsvorrichtung jedoch auch vorteilhaft die exakte Anzahl und Art der biologischen Partikel bestimmt werden. Dies ist beispielsweise vorteilhaft, wenn Proben unbekannter Herkunft untersucht werden.

Ein Verfahren zur automatischen Detektion von Partikeln, insbesondere biologischen Partikeln, weist die folgenden Schritte auf:
a) automatische Aufnahme einer Probe mit zu erfassenden Partikeln in eine Fluidikeinrichtung;
b) automatische Aufbereitung der Probe in der Fluidikeinrichtung;
c) automatisches Leiten der aufbereiteten Probe mittels der Fluidikeinrichtung durch ein Detektionsgefäß, wobei ein an Wänden des Detektionsgefäßes fließendes Hüllfluid die aufbereitete Probe umschließt;
d) Erfassen von wenigstens einem physikalischen Parameter der Partikel in der Probe.

Vorteilhaft wird vor Schritt a) ein Schritt automatische Überprüfung der Detektionseinrichtung mittels einer Kalibrierlösung durchgeführt.

Weiter vorteilhaft wird nach Schritt d) ein Schritt automatische Reinigung der Fluidikeinrichtung und des Detektionsgefäßes durchgeführt.

Vorzugsweise erfolgt dabei die Aufnahme und/oder die Aufbereitung der Probe und/oder das Leiten der Probe durch das Detektionsgefäß kontinuierlich.

Vorteilhaft werden die Schritte der Detektion in einer Detektionsvorrichtung durchgeführt, wobei die Elemente der Detektionsvorrichtung derart von einer Steueinrichtung angesteuert werden, dass die Schritte der Detektion automatisch erfolgen.

Vorzugsweise werden in Schritt d) mehrere physikalische Parameter der Partikel erfasst, insbesondere Größe, Oberflächenstruktur, Fluoreszens-Intensität und/oder Fluoreszenz-Wellenlänge, wobei in einem Schritt e) Auswerten der erfassten Parameter entweder wenigstens zwei der erfassten Parameter gegeneinander aufgetragen werden, wobei ein Muster der Auftragung erkannt und mit bekannten Mustern verglichen wird, oder die Partikel einzeln erfasst werden.

Im Folgenden wird die Erfindung anhand der beigefügten Zeichnungen näher erläutert. Dabei zeigt:
- Fig. 1: eine erste Ausführungsform einer Detektionsvorrichtung zum Detektieren von biologischen Partikeln;
- Fig. 2: eine modifizierte erste Ausführungsform der Detektionsvorrichtung aus Fig. 1, wobei eine automatische Entnahme einer Probe aus einer Leitung möglich ist;
- Fig. 3: eine weitere modifizierte erste Ausführungsform der Detektionsvorrichtung aus Fig. 1; und
- Fig. 4: eine zweite Ausführungsform der Detektionsvorrichtung zum Detektieren von biologischen Partikeln.

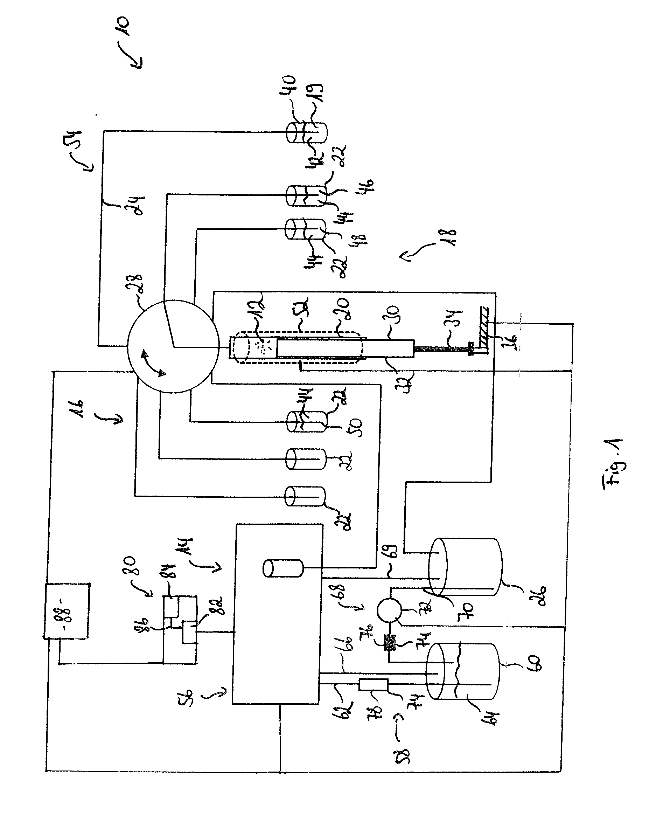

Fig. 1 zeigt eine Detektionsvorrichtung 10 zur automatischen Detektion von Partikeln 12.

Die Detektionsvorrichtung 10 weist eine Detektionseinrichtung 14 und eine Fluidikeinrichtung 16 auf.

Die Fluidikeinrichtung 16 umfasst eine Aufbereitungseinrichtung 18, in der Partikel 12 einer zu untersuchenden Probe 19 automatisch aufbereitet werden können.

Die Aufbereitungseinrichtung 18 weist eine Mischeinrichtung 20, mehrere Reservoire 22 und eine Probenaufnahmevorrichtung 24 auf. Zusätzlich ist in der Aufbereitungseinrichtung 18 ein Abfallgefäß 26 vorgesehen.

Die Mischeinrichtung 20 ist über ein Mehrwegeventil 28 sowohl mit der Probenaufnahmevorrichtung 24, jedem der Reservoire 22, der Detektionseinrichtung 14 als auch mit dem Abfallgefäß 26 verbindbar.

Die Mischeinrichtung 20 ist in der vorliegenden Ausführungsform als Pumpeinrichtung 30 in Form einer Kolbenspritze 32 ausgebildet. Ein Kolben 34 der Kolbenspritze 32 ist dabei über ein Schneckengetriebe 36 angetrieben.

Soll nun eine Probe 19 daraufhin untersucht werden, ob und in welcher Konzentration sie insbesondere biologische Partikel 12 aufweist, wird die Mischeinrichtung 20 durch das Mehrwegeventil 28 mit der Probenaufnahmevorrichtung 24 verbunden, die in ein Probengefäß 40 ragt.

Der Kolben 34 wird über das Schneckengetriebe 36 zurückgezogen, so dass in der Kolbenspritze 32 ein Unterdruck entsteht und eine Probenflüssigkeit 42 aus dem Probengefäß 40 in die Mischeinrichtung 20 gezogen wird.

Nachfolgend wird die Kolbenspritze 32 über das Mehrwegeventil 28 mit den Reservoiren 22 verbunden, um daraus Reaktionsfluid 44 aufzunehmen, das in der Kolbenspritze 32 durch Auf- und Abbewegung des Kolben 34 mit der Probenflüssigkeit 42 vermischt wird.

Das Reaktionsfluid 44 kann als Markerfluid 46 ausgebildet sein und einen Farbstoff aufweisen. Alternativ oder auch zusätzlich ist es möglich, das Reaktionsfluid 44 als Sondenfluid 48 auszubilden, das Sonden zur spezifischen Reaktion mit den Partikeln 12 in der Probe 19 aufweist.

In der vorliegenden Ausführungsform sind zusätzlich noch Reservoire 22 zur Lagerung von Waschflüssigkeit 50 vorgesehen.

Nachdem die Probenflüssigkeit 42 mit dem Reaktionsfluid 44 in der Kolbenspritze 32 zusammengebracht worden ist, kann eine geregelte Heizeinrichtung 52 angeschaltet werden, um die Flüssigkeit in der Kolbenspritze 32 zu temperieren und somit eine Reaktion zwischen in dem Reaktionsfluid 44 vorhandenen Markern oder Sonden mit den Partikeln 12 in der Probenflüssigkeit 42 zu unterstützen oder erst zu ermöglichen.

Nachfolgend wird die Kolbenspritze 32 über das Mehrwegeventil 28 mit der Detektionsinrichtung 14 verbunden, so dass durch Bewegung des Kolbens 34 die aufbereitete Probenflüssigkeit 42 in die die Detektionseinrichtung 14 geleitet werden kann.

Sowohl das Mehrwegeventil 28 als auch das Schneckengetriebe 36 werden durch nicht gezeigte Schrittmotoren angetrieben.

Überflüssiges Reaktionsfluid 44 bzw. Waschflüssigkeit 50 kann dann durch Verbindung der Kolbenspritze 32 mit dem Abfallgefäß 26 aus der Kolbenspritze 32 entfernt werden.

Die beschriebenen Elemente der Aufbereitungseinrichtung 18 bilden einen Teilbereich 54 der Fluidikeinrichtung 16.

Die Detektionsinrichtung 14 weist ein Durchflusszytometer 56 auf. Die aufbereitete Probenflüssigkeit 42 wird durch die Fluidikeinrichtung 16 automatisch von der Aufbereitungseinrichtung 18 zu diesem Durchflusszytometer 56 geleitet, so dass physikalische Parameter der aufbereiteten Partikel 12 erfasst werden können.

Die Fluidikeinrichtung 16 weist zusätzlich einen Detektionseinrichtungsversorgungsbereich 58 auf, der die Detekionseinrichtung 14 mit darin benötigten Fluiden versorgen kann.

Dazu ist in dem Detektionseinrichtungsversorgungsbereich 58 ein Hüllfluidreservoir 60 vorgesehen, von dem über eine Zuleitung 62 ein Hüllfluid 64 zu der Detektionseinrichtung 14 geleitet werden kann.

Denn bei der Durchflusszytometrie wird, wie weiter unten ausführlicher beschrieben wird, die aufbereitete Probenflüssigkeit 42 von einem Hüllfluid 64 umhüllt, um so den Strömungsdurchmesser der Probenflüssigkeit 42 zu verringern und eine Vereinzelung der darin enthaltenen aufbereiteten Partikel 12 zu ermöglichen.

In der in Fig. 1 gezeigten Ausführungsform wird die Zuleitung 62 durch Vorsehen einer Druckluftleitung 66 unterstützt, über die Druckluft in das Hüllfluidreservoir 60 eingeleitet wird, um so Hüllfluid 64 durch die Zuleitung 62 zu drücken.

In der vorliegenden Ausführungsform der Detektionsvorrichtung 10 ist eine Recyclingeinrichtung 68 vorgesehen, mit der es möglich ist, Abfallfluid, das von der Kolbenspritze 32 in das Abfallgefäß 26 geleitet worden ist, aufzubereiten und in der Detektionseinrichtung 14 als Hüllfluid 64 wiederzuverwerten. In das Abfallgefäß 26 wird über eine Ableitung 69 auch in der die Detektionseinrichtung 14 verwendetes Hüllfluid 64 bzw. untersuchte Probenflüssigkeit 42 eingeleitet und kann so wiederverwertet werden.

Zum Recyclen ist das Abfallgefäß 26 über eine Verbindungsleitung 70 mit dem Hüllfluidreservoir 60 und somit mit der die Detektionseinrichtung 14 verbunden.

In der Verbindungsleitung 70 ist eine Pumpe 72 zum Pumpen des Abfallfluides in das Hüllfluidreservoir 60 sowie ein Filter 74 in Form eines Aktivkohlefilters 76 angeordnet. Durch den Aktivkohlefilter 76 können in dem Abfallfluid eventuell vorhandene Markermoleküle oder Sondenmoleküle ausgefiltert werden.

Weiter weist auch die Zuleitung 78 einen Filter 74 in Form eines Porenfilters 78 auf, durch den in dem Abfallfluid eventuell vorhandene biologische Partikel 12 oder andere Verunreinigungen ausgefiltert werden können. Dazu weist der Porenfilter 78 vorzugsweise Poren mit einer Porengröße zwischen 0,1 µm bis 0,3 µm auf, was in der Größenordnung von kleiner als insbesondere Bakterien liegt.

Die Fluidikeinrichtung 16 weist mindestens ein Gefäß 22 mit Reinigungsflüssigkeit auf, so daß nach Ablauf der Detektion einer Probe 19 sämtliche Leitungen automatisch geleert, gereinigt und wieder neu befüllt werden können. Dies verhindert Verunreinigungen und Verschleppungen.

Weiter ist die Fluidikeinrichtung 16 in der Lage, Proben 19 mit einer hohen Zahl an Partikeln 12 automatisch zu verdünnen. Abhängig von den Eigenschaften der Detektoren und den Strömungsgeschwindigkeiten von Hüllfluid 64 und Probenflüssigkeit 42 ist die Erfassung einer hohen Zahl an Partikeln 12 begrenzt. Dies ist insbesondere der Fall, wenn die Zahl der Partikel 12 so groß ist, daß sie sich in der Detektionseinrichtung 14 nicht mehr vereinzeln lassen, sondern mehrere Partikel 12 als ein einziger erfasst werden. In diesem Fall ist eine Verdünnung der Probe 19 mit reinem Fluid erforderlich, was ebenfalls durch die Fluidikeinrichtung 16 erreicht werden kann.

Nach Erfassen der physikalischen Parameter der aufbereiteten Partikel 12 in der Detektionseinrichtung 14 werden die erfassten Daten in einer Auswerteeinrichtung 80 ausgewertet. Die Auswerteeinrichtung 80 weist eine Mustererkennungseinheit 82 auf, die eine Speichereinheit 84 sowie eine Vergleichseinheit 86 umfasst.

Werden in der Detektionseinrichtung 14 mehrere physikalische Parameter der aufbereiteten Partikel 12 erfasst, können diese vorteilhaft zu einem Muster gegeneinander aufgetragen werden.

Solche Muster können in der Mustererkennungseinheit 82 erkannt werden, indem beispielsweise ein bekanntes Muster, das in der Speichereinheit 84 gespeichert ist, von der Vergleichseinheit 86 mit einem erfassten Muster verglichen wird.

Ergeben sich Abweichungen in dem Muster, deutet dies auf eine Verunreinigung der Probe 19 hin.

Sind in der Speichereinheit 84 keine bekannten Muster zu einer gemessenen Probe 19 vorhanden, ist es alternativ möglich, die Partikel 12 einzeln entsprechend ihrer Art bzw. Konzentration in der Probe 19 zu erfassen.

Die Detektionsvorrichtung 10 weist eine Steuereinrichtung 88 auf, durch die sämtliche Elemente der Detektionsvorrichtung 10, insbesondere aller Elemente der Fluidikeinrichtung 16 und der die Detektionseinrichtung 14 automatisch angesteuert werden können.

Somit ist weder zur Probenaufnahme noch zur Aufbereitung der Probe 19 noch zur Detektion noch zur Auswertung geschultes Personal nötig.

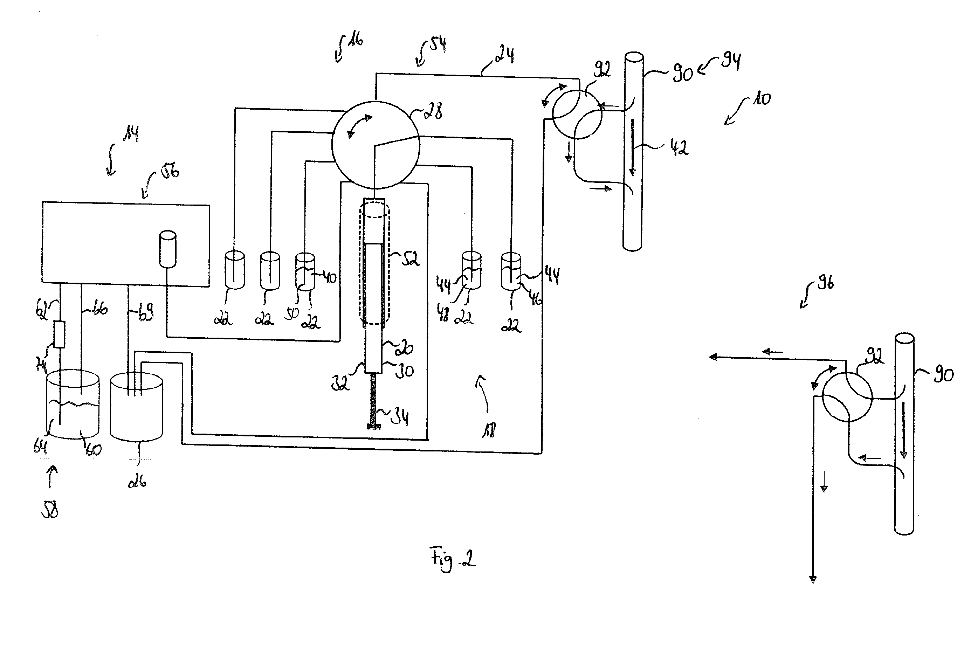

Fig. 2 zeigt eine modifizierte Detektionsvorrichtung 10, die zu der Detektionsvorrichtung 10 in Fig. 1 weitgehend identisch ist, wobei lediglich die Probenaufnahmevorrichtung 24 verändert ist. Die Recyclingseinrichtung 68 kann ebenfalls vorgesehen werden, ist jedoch aus Gründen der Übersichtlichkeit in Fig. 2 nicht gezeigt.

Die veränderte Probenaufnahmevorrichtung 24 in Fig. 2 ist derart modifiziert, dass die Probe 19 direkt aus einer Leitung 90 entnommen werden kann. Dazu weist die Probenaufnahmevorrichtung 24 ein Umschaltventil 92 auf, das in Fig. 2 sowohl in Detektionsposition 94 als auch in Probenaufnahmeposition 96 gezeigt ist.

In Probenaufnahmeposition 96 verbindet das Umschaltventil 92 die Probenaufnahmevorrichtung 24 mit der Leitung 90, so dass ein in der Leitung 90 fließendes Fluid, beispielsweise Wasser, direkt in die Probenaufnahmevorrichtung 24 eingeleitet wird. Hierzu ist das Vorhandensein des Schneckengetriebes 36 an dem Kolben 34 vorteilhaft, da die Schnecke selbsthemmend ist und einen Rückschlag des Kolbens 34 bei hohen Drücken des Fluids in der Leitung 90 bei Verbindung von Kolbenspritze 32 mit Probenaufnahmevorrichtung 24 verhindert.

In der die Detektionsposition 94 wird die Verbindung zwischen Leitung 90 und Probenaufnahmevorrichtung 24 unterbrochen und das von der Leitung 90 abgezweigte Fluid wieder direkt in die Leitung 90 zurückgeleitet.

So ist auch eine vollautomatische Probennahme aus einer regelmäßig zu überwachenden Leitung 90, beispielsweise einer Wasserleitung, möglich.

Die Detektionsposition 94 stellt gleichzeitig die Ruheposition dar, also wenn keine Entnahme stattfindet. Durch die spezielle Ausführung der Probenaufnahmevorrichtung 24 mit 2/2-Wege-Ventil wird sichergestellt, dass sämtliche Leitungen 90 permanent mit Fluid durchspült werden und keine Leitungen 90 mit stehendem Fluid vorhanden sind. Stehendes Fluid würde die Bildung von Biofilm in den Probenahmeleitungen fördern, was zu Verfälschungen des Messergebisses führen würde.

In Detektions- bzw. Ruheposition 94 wird die Abzweigung von der Haupt-Rohrleitung permanent mit Fluid durchspült. Probenaufnahmeleitung 24 kann von der Fluidikeinrichtung 16 mittels Reinigungsfluid automatisch gereinigt bzw. desinfiziert werden.

In Probenaufnahmeposition 96 wird ein Teil des Abzweigs von der Fluidprobe durchspült, während der andere Teil von der Hauptleitung aus in das Abfallgefäß 26 rückgespült wird.

Auf diese Weise sind sämtliche mit der Probe in Berührung kommende Elemente des Probenahmesystems permanent durchspült bzw. automatisch desinfizierbar.

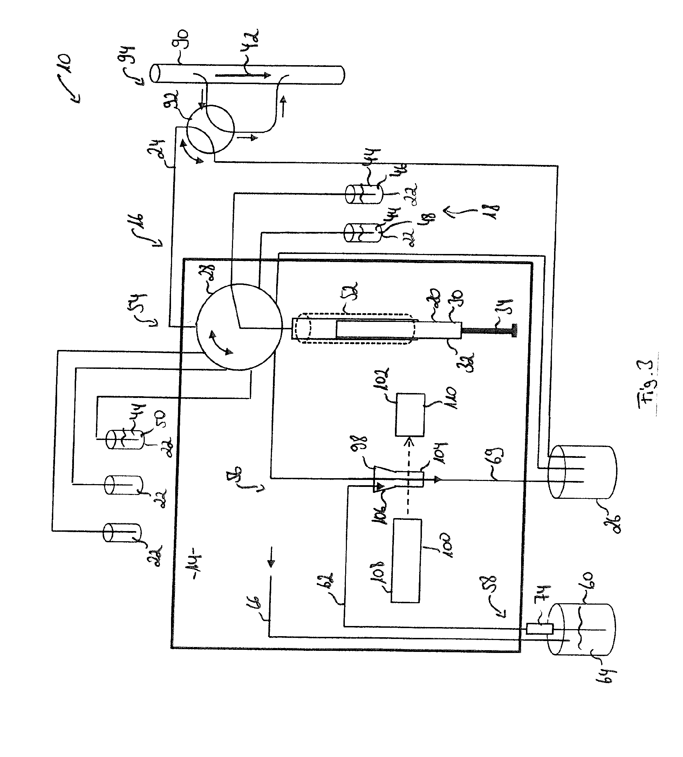

Fig. 3 zeigt eine weitere Modifikation der Detektionsvorrichtung 10 aus Fig. 1.

Hierbei sind das Mehrwegeventil 28 sowie die Kolbenspritze 32 direkt in der Detektionseinrichtung 14 angeordnet. Somit kann aufbereitete Probenflüssigkeit 42 unter Verwendung der Pumpfunktion der Kolbenspritze 32 direkt in ein Detektionsgefäß 98 geleitet werden, ohne dass weitere Pumpen innerhalb der die Detektionseinrichtung 14 benötigt werden.

Der in Fig. 1 beschriebene Teilbereich 54 der Fluidikeinrichtung 16 entspricht dem bereits beschriebenen Aufbau, wobei eine automatische Probennahme aus der Leitung 90 realisiert ist.

Die Detektionseinrichtung 14 ist als Durchflusszytometer 56 gebildet und weist daher neben dem der Detektionsgefäß 98 eine Anregungsquelle 100 sowie eine Detektoreinheit 102 auf

Das Detektionsgefäß 98 ist als trichterförmige Küvette 104 ausgebildet, um so den Strömungsdurchmesser der eingeleiteten Probenflüssigkeit 42 in Strömungsrichtung zu verringern. Weiter wird über die Zuleitung 62 Hüllfluid 64 in die Küvette 104 eingeleitet und entlang von Wänden 106 der Küvette 104 geführt. Damit verringert sich der mögliche Strömungsdurchmesser der Probenflüssigkeit 42 noch weiter, so dass Partikel 12 im Idealfall einzeln an Anregungsquelle 100 und Detektoreinheit 102 vorbeigeführt werden und erfasst werden können.

In der vorliegenden Ausführungsform ist die Anregungsquelle 100 durch eine Lichtquelle 108 in Form eines Lasers und die Detektoreinheit 102 durch einen Photomultiplier 110 gebildet.

Die Recyclingseinrichtung 68 kann ebenfalls vorgesehen werden, ist jedoch aus Gründen der Übersichtlichkeit in Fig. 3 nicht gezeigt.

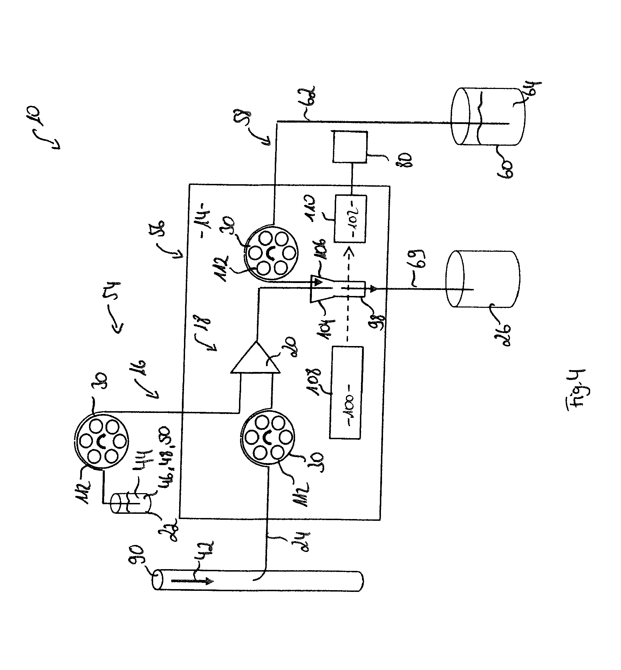

Fig. 4 zeigt eine zweite Ausführungsform der Detektionsvorrichtung 10, die sich von der in Fig. 1 bis Fig. 3 gezeigten Detektionsvorrichtung 10 unterscheidet.

Denn hier werden Peristaltikpumpen 112 verwendet, die in der Probenaufnahmevorrichtung 24 und zwischen dem Reservoir 22 für das Reaktionsfluid 44 und der Mischeinrichtung 20 angeordnet sind. Weiter ist auch eine Peristaltikpumpe 112 in der Zuleitung 62 von dem Hüllfluidreservoir 60 zu dem Detektionsgefäß 98 vorgesehen.

Die Peristaltikpumpen 112 ermöglichen eine kontinuierliche Zufuhr von Probenflüssigkeit 42 bzw. Reaktionsfluid 44 zu der Mischeinrichtung 20. Die vorbereitete Probe 19 wird dann dem Detektionsgefäß 98 zugeführt. Durch geeignete Wahl von Schlauchdurchmessern und Pumpgeschwindigkeiten kann das optimale Mischverhältnis von Probenflüssigkeit 42 zu Reaktionsfluid 44 eingestellt werden.

Durch eine weitere Peristaltikpumpe 112 ist auch eine kontinuierliche Zufuhr von Hüllfluid 64 sowie aufbereiteter Probenflüssigkeit 42 zu dem der Detektionsgefäß 98 möglich.

Die Förderung des Hüllfluids 64 ist auch durch Druckbeaufschlagung statt durch eine Peristaltikpumpe 112 möglich.

Durch die in Fig. 4 gezeigte Anordnung ist somit eine tatsächlich kontinuierliche Überwachung des in der Leitung 90 fließenden Fluides möglich.

Die Detektionsvorrichtung 10 kann beispielsweise bei der Flugzeugherstellung eingebaut werden, um langfristig zur Überwachung der Trinkwasserqualität im Flugzeug verwendet werden zu können.

Die Bestimmung der hygienischen Qualität (Keimzahl) beispielsweise einer Wasserprobe (Trink-, Bade-, Mineral-, Oberflächen-, Prozeßwasser) oder von Getränken erfolgt seit über 100 Jahren mittels Kultivierung auf nährstoffhaltigen Medien wie beispielsweise Agarplatten. Dieses Verfahren ist zeitaufwändig, da es mehrere Tage benötigt, indirekt, nicht sehr sensitiv und erfordert eine Anzahl manueller Schritte sowie spezialisiertes Personal. Mit der beschriebenen Detektionsvorrichtung 10 wird hingegen eine vollautomatische und kontinuierliche Zählung der tatsächlich in der Probe 19 enthaltenen Bakterien ermöglicht, sowohl in Einzelproben als auch direkt an einer Wasserleitung 90.

Das Gesamtsystem beinhaltet als eigentliches Detektionsverfahren die sog. Durchflußzytometrie. Diese ist seit etwa 50 Jahren bekannt und kontinuierlich weiterentwickelt worden. Bislang können damit nur einzelne Proben 19 analysiert werden; eine kontinuierliche oder quasi-kontinuierliche Analyse ist bis dato damit nicht möglich.

Dieses Problem wird n u n durch einen fluidischen Aufbau gelöst, bestehend aus Ventil(en) und Pumpe(n). Damit werden Wasserprobe, Reinigungs- und Puffersubstanzen sowie geeignete fluoreszierende Sonden gefördert, gemischt und temperiert. Es werden in den Fig. 1 bis Fig. 4 verschiedene Ausführungen eines solchen Aufbaus gezeigt.

Die Detektionsvorrichtung 10 ermöglicht eine automatisierte, quasi-kontinuierliche Analyse der hygienischen Qualität einer Wasserprobe oder einer anderen wässrigen Flüssigkeit (z.B. in Zeitintervallen von 10 - 15 Minuten oder kürzer, abhängig von der Reaktionsgeschwindigkeit Sonde - Probe 19).

Es wird eine automatische und kontinuierliche Zählung von Bakterien in Wasser oder in wässrigen Lösungen durchgeführt.

Der Nachweis von Bakterien in Wasser (Trinkwasser, Badegewässer, Mineralwasser, Prozesswasser, Oberflächenwasser, Grundwasser, Abwasser, Kühlwasser, etc.), Getränken (z.B. Milch) oder anderen wässrigen Medien wird routinemäßig mit sog. Kultivierungsverfahren durchgeführt. Dabei wird eine bestimmte Menge der Probe 19, z.B. Wasser, gefiltert und das Filter anschließend auf einer Agar-Platte mit geeignetem Medium inkubiert. Bei hohen Keimkonzentrationen kann eine bestimmte Menge der Probe 19 auch direkt auf die Agar-Platte gegeben werden. Verschiedene Varianten dieses Verfahrens zum spezifischen und unspezifischen Nachweis von Keimen wurden gegen Ende des 19. Jahrhunderts entwickelt und seither fast unverändert in der Routine eingesetzt. Durch die flächendeckende Einführung solcher Analysen konnte die Ausbreitung von Seuchen über das Wasser vor allem in den Industrieländern wirkungsvoll verhindert werden. Obwohl die Kultivierungsmethode schon recht alt ist, erfüllt sie im Alltag ihren Zweck, was die hohe Qualität unseres Trink- und Badewassers beweist.

Kultivierungsmethoden haben jedoch eine Reihe von Nachteilen, insbesondere:
- hoher Zeitaufwand: erste Ergebnisse nach 24 - 48 Stunden; Endergebnis nach 72 Stunden oder später
- Nicht automatisierbar
- Viele manuelle Schritte (Filtration, Plattierung, Auszählung)
- Hohe Unsicherheit bzw. Varianz durch manuelle Auszählung
- Erfahrenes Personal erforderlich
- Fehleranfällig (z.B. falsche Temperatur des Agars, unsteriles Arbeiten, falsche Interpretation der Kolonien)
- Die Bakterien werden nur indirekt erfasst (es werden Kolonien gezählt, nicht einzelne Bakterien)
- Niedrige Sensitivität, da nur ein Bruchteil der Bakterien erfasst wird
- Kleiner Messbereich pro Platte (min. ca. 30 bis max. ca. 300 Kolonien); dadurch sind je nach Probe entsprechende Verdünnungen oder Aufkonzentrierungen erforderlich
- Spezielle Infrastruktur (Labor) notwendig.

Dadurch ergeben sich eine Vielzahl von Situationen oder Anwendungen, bei welchen eine Überwachung der hygienischen Qualität zwar dringend notwendig wäre, wo jedoch die Kultivierungsmethode nicht geeignet ist. Dies ist vor allem bei zeitkritischen Prozessen der Fall oder aber auch bei langen Transportwegen vom Ort der Probenahme ins Labor (nach DIN EN ISO 19458 darf der Probentransport nicht länger als 8 Stunden betragen und sollte möglichst gekühlt erfolgen).

Solche Situationen können sein (beispielhaft):
- Zügige Kontrolle und Freigabe von wasserführenden Systemen (Rohrleitungen, Tanks) nach Desinfektionsmaßnahmen
- Endkontrolle der Trinkwassertanks im Flugzeugbau.
- Kontrolle von wasserführenden Systemen in Verkehrs- und Transportmitteln mit langer Reisezeit bzw. Autonomiezeit (Schiffe, U-Boote, Flugzeuge, Raumkapseln, Raumstationen)
- Freigabe von Produkten in Pharma-, Biotech-, Chemie- und Lebensmittelbetrieben
- Kontinuierliche Überwachung von Trinkwasseraufbereitungssystemen
- Kontinuierliche Überwachung von Wassererzeugungssystemen (z. B. Brennstoffzelle)
- Erkennung von graduellen, aber raschen (innerhalb 1 Tages) Veränderungen der Wasserqualität, z.B. durch Ablösung von Biofilmen von Rohrleitungen oder Kontamination des Wassers durch Rohrbrüche
- Erkennung von sehr schnellen (innerhalb 1 Stunde) Veränderungen der Wasserqualität, z.B. durch Naturkatastrophen (Erdbeben, Starkregen), Störungen und Pannen (Durchbruch von Filtern), Unfälle oder absichtliche Kontamination (Bioterrorismus).

In diesen Fällen sind alternative, d.h. vor allem schnellere und/oder automatische und/oder laborunabhängige Verfahren zur Bestimmung der hygienischen Qualität des Wassers oder der betreffenden Flüssigkeit notwendig.

Neben Flüssigkeiten müssen häufig auch andere Stoffe und Medien (z.B. Luft, Oberflächen, Bodenproben, Filterelemente, feste Nahrungsmittel, etc.) auf ihren hygienischen Zustand hin untersucht werden. In vielen Fällen ist es schwierig, dies auf direktem Wege zu bewerkstelligen. Vielmehr ist es meist notwendig und sinnvoll, die vorhandenen Keime zunächst möglichst quantitativ in ein wässriges Medium zu überführen und anschließend darin zu analysieren.

Folgende Methoden des Transfers von Keimen von einem nicht- wässrigen Medium in ein wässriges Medium sind üblich (beispielhaft):
- Luft-Sampling in wässriges Medium durch Impingement, Cyclone, Bubbling, etc. Luft-Sampling auf Gelatine-Filter mit anschließender Verflüssigung
- Abstriche von Oberflächen und Überführung in wässriges Medium
- Auflösung von Bodenproben in wässrigem Medium
- Pürieren von Lebensmitteln.

Die daraus gewonnenen Flüssigkeiten werden anschließend ebenfalls mittels Kultivierungsverfahren untersucht. Jedoch ergibt sich auch hier eine große Anzahl von Situationen, in welchen eine deutlich schnellere Analyse dringend notwendig wäre, so z.B.:
- Luftqualitäts-Überwachung im militärischen Bereich (Kasernen, Camps, Schiffe, etc.) und bei kritischen Infrastrukturen (Flughäfen, Bahnhöfe, U-Bahnen, etc.)
- Hygienische Kontrolle von OP's und Intensivstationen
- Verhinderung der Ausbreitung von Epidemien durch Überwachung der Luft in Flugzeugen, Hochgeschwindigkeitszügen, etc.
- Lebensmittelkontrolle
- Überwachung von Tierställen.

In den vergangenen Jahren wurden mehrere Alternativen, d.h. vor allem schnellere Verfahren entwickelt, um Bakterien in Wasser analysieren zu können. Wie bei praktisch allen bioanalytischen Verfahren wird dabei folgendes, allgemeines Prinzip angewandt:

### i) Reaktion des Analyten (hier: Bakterien) mit einem "Marker" oder einer "Sonde"

Dies kann beispielsweise ein Antikörper, ein Nukleinsäurefragment, ein Enzymsubstrat oder ein Farbstoff sein. Die Sonde selbst trägt eine Markierung, also z.B. ein Farbstoff oder erzeugt eine Markierung (Farbstoff, elektrochemisches Signal, etc.). Ideal sind solche "Sonden", deren Markierung erst nach der Bindung an den Analyten aktiv wird. Üblicherweise werden sichtbare, fluoreszierende oder chemilumineszente Farbstoffe eingesetzt.

Dieser Schritt ist der eigentliche biochemische oder molekularbiologische Nachweis und stellt i.A. den limitierenden Faktor beim sensitiven Nachweis eines Analyten dar. Deshalb muss hierauf besondere Sorgfalt verwendet werden, da vor allem Sensitivität und Spezifität des Detektionsverfahrens entscheidend von der Qualität des biologischen Nachweises abhängen. Die richtige Auswahl dieses Nachweises ("Assay") wird vom Ziel des Verfahrens bestimmt (was will ich nachweisen?, wie schnell?, etc.).

Ein in der Praxis wichtiger Faktor beim Nachweis sehr geringer Mengen an Analyt sind die Hintergrundsignale durch unspezifische Reaktionen oder Bindungen. Diese müssen verhindert oder rückgängig gemacht werden. Teilweise lassen sie sich auch beim Detektionsverfahren ausgrenzen.

### ii) Nachweis der Markierung

Zur anschließenden oder zeitgleichen Detektion der Markierung werden physikalisch-technische Verfahren eingesetzt. Das Spektrum solcher Detektionstechnologien reicht von elektrochemischen Verfahren (Voltammetrie, Amperometrie), über radioaktive Nachweise bis hin zur Massenspektrometrie. Am weitesten verbreitet sind jedoch optische Verfahren. Dabei ist es vorteilhaft, wenn biologischer Nachweis und Detektionsverfahren eng aufeinander abgestimmt sind.

Auch die alternativen Verfahren zum Nachweis von Bakterien werden derzeit nur im Labor angewandt, sind also praktisch ortsgebunden. Grund dafür sind die Größe und Empfindlichkeit der Detektionssysteme, notwendige Lagerung von Chemikalien, notwendige manuelle Analysen-Schritte, etc. Eine kontinuierliche Messung ist ebenfalls nicht möglich.

Das Prinzip der Flußzytometrie besteht in der sog. "hydrodynamischen Fokussierung". Eine flüssige Probe 19 wird durch eine trichterförmige Küvette 104 gepumpt. Dabei wird sie von einer anderen, ebenfalls gepumpten Flüssigkeit ("Hüllstrom") umhüllt, wodurch der Probenstrom verengt wird. Beide Strömungen sind laminar; der Grad der Fokussierung des Probenstroms hängt vom Verhältnis der beiden Pumpgeschwindigkeiten ab. Der auf wenige Mikrometer verengte Probenstrom wird an einem Detektor vorbeigeführt. Bei geeigneter Probengeschwindigkeit und geeigneter Analytkonzentration werden die in der Probe vorhandenen Partikel 12 (hier: Bakterien) nacheinander am Detektor vorbeigeführt und können somit einzeln erfasst werden. Die Detektionseinheit besteht meistens aus einem oder mehreren Lasern zur Beleuchtung und drei oder mehreren Detektoren (Photomultiplier 110) zur Erfassung von Streulicht (vorwärts, seitwärts) und Fluoreszenzsignalen.

Die Verwendung der Durchflußzytometrie zur Detektion von Bakterien wurde bereits in den 1990er Jahren beschrieben; dieses Verfahren fand jedoch in der Mikrobiologie keine breite Anwendung. In der Zwischenzeit wurden die Geräte jedoch günstiger, kompakter und einfacher in der Handhabung. Durch die Verwendung von solid-state Lasern sind sie robuster und leichter transportierbar. Vor allem jedoch konnte die räumliche optische Auflösung auf unter 1 µm gesenkt werden, wodurch die zuverlässige Erfassung praktisch aller Bakterien möglich wird.

Die Flußzytometrie bietet als Detektionstechnologie zum Nachweis von Bakterien in Flüssigkeiten folgende Vorteile:
- Das Prinzip des kontinuierlichen Probendurchflusses macht sie geradezu prädestiniert für eine kontinuierliche Messung.
- Durch mehrfache Information über den einzelnen erfassten Partikel 12 (die Lichtstreuung kann als Maß für die Größe dienen; zusätzlich werden Fluoreszenz- Intensität und -Wellenlänge erfasst) können Hintergrundsignale gut ausgegrenzt werden
- Die Messung ist schnell (1 ml Probe 19 kann in wenigen Minuten analysiert werden)
- Da die Küvette 104 einen Durchmesser von typischerweise 100 ml oder mehr hat, können auch Proben 19, die große Partikel 12 enthalten, analysiert werden, ohne dass es zu einer Verstopfung der Detektionskammer kommt. Engporige Vorfilter, die möglicherweise zu einer Verfälschung der Probe 19 führen würden, sind deshalb nicht notwendig.

Für die automatisierte Bakteriendetektion mittels Durchflußzytometrie sind verschiedene Ausführungen möglich.

Zur Automatisierung der Färbereaktion (Reaktion mit der markierten Sonde) wurde folgendes in Fig. 1 gezeigtes Konzept entwickelt: Wasserprobe und notwendige weitere Lösungen werden mittels einer Spritzenpumpe aufgezogen bzw. abgegeben. Die Auswahl erfolgt dabei über ein Mehrfach-Selektor-Ventil. Der Farbstoff wird zur Wasserprobe zugegeben, eine bestimmte Zeit inkubiert und dann ins Flußzytometer überführt. Die Spritzenpumpe selbst kann beheizt werden, so dass auch Inkubationen bei Temperaturen höher als die Raumtemperatur möglich sind. Gleichzeitig kann durch Auf- und Abbewegung des Spritzenkolbens eine Durchmischung von Flüssigkeiten (z.B. Probe 19 und Farbstoff) erfolgen. Eine Verdünnung der Wasserprobe (bei stark belasteten Proben) ist mit Hilfe der Pumpe ebenfalls möglich. Die Ankopplung an das Flußzytometer erfolgt über ein modifiziertes Probengefäß. Pumpe und Ventile werden über Schrittmotoren angetrieben

Um die Autonomie des Systems zeitlich zu verlängern, kann die Abfallflüssigkpit ("Waste") über ein Aktivkohle-Filter 76 recycelt und dem Hüllstrom-Reservoir zugeführt werden. Die Aktivkohle entfernt dabei die überschüssigen Farbstoffmoleküle (Sonde) aus der Abfallflüssigkeit. Bakterien und Partikel werden durch ein In-line-Filter mit etwa 0,2 µm Porengröße entfernt.

Durch Einfügen eines zusätzlichen Umschaltventils 92 (4/2 Wege-Ventil), gezeigt in Fig. 2, kann das gesamte System an ein Rohrleitungsnetz angeschlossen werden ("on-line" Messung). Da der Kolben 34 der Spritzenpumpe von einem Schrittmotor über eine Getriebeschnecke angetrieben wird, ist es praktisch unmöglich, diesen Kolben 34 durch äußere Einwirkung zu bewegen. Somit ist die Spritzenpumpe vom Wasserdruck in der Rohrleitung unbeeinflusst, so dass z.B. die Notwendigkeit für einen Druckminderer o.ä. entfällt.

Das Umschaltventil 92 ist in Fig. 2 in Mess-Position und in in Injektions-Position gezeigt.

Manche Flußzytometer verwenden intern ebenfalls eine Spritzenpumpe, um die Probe in die Cytometer-Küvette einzubringen. Die in Fig. 1 und Fig. 2 gezeigte Ausführung kann deshalb auch in das Gerät integriert werden, wodurch eine Spritzenpumpe eingespart wird.

Andere Flußzytometer verwenden statt einer Spritzenpumpe Schlauchpumpen (Peristaltikpumpen 112), um die Probe 19 und den Hüllstrom zu fördern. Mit Hilfe solcher Geräte kann eine echte kontinuierliche on-line Messung realisiert werden. Über die Pumprate der beiden Peristaltikpumpen 112 kann das Mischverhältnis von Sonde (Detektionsreagenz) zu Wasserprobe eingestellt werden. Auch die Peristaltikpumpen 112 sind unabhängig vom Flüssigkeitsdruck, so daß ein Druckminderer ebenfalls entfallen kann.

Als Reaktionsfluid 44 können Waschlösungen, Konservierungslösungen, Detektions-Reagentien, Sonden wie Farbstoffe oder Enzymsubstrate oder auch Beads zur Kalibration verwendet werden.

Bei Flußzytometern werden üblicherweise die Daten der optischen Detektoren (entsprechend den einzelnen Parametern) für jeden sog. "Event" (erkannter Partikel 12) nacheinander in einer Tabelle abgespeichert (sog. "Listmode Data File"). Aus diesen tabellarischen Rohdaten lassen sich für jeden Parameter Histogramme erstellen. Aussagekräftiger sind jedoch meist Histogramme aus der Kombination zweier Parameter, sog. Dotplots, oder gar dreidimensionale Darstellungen.

Abhängig von den optischen Eigenschaften und der Homogenität der Bakterienpopulation lassen sich in solchen Darstellungen häufig verschiedene "Cluster" unterscheiden. Des Weiteren ist hier auch i.A. eine Unterscheidung von Bakterien zu Hintergrund-Partikeln möglich.

Insbesondere bei Quellwasser ändert sich die Zusammensetzung der Bakterienpopulation sowie die Zahl der abiotischen Partikel kaum, auch nicht über längere Zeiträume. Die o.g. Cluster bilden also ein Muster, welches typisch für die jeweilige Wasserquelle ist. Zur Informationsverarbeitung bieten sich also Algorithmen zur Mustererkennung an, so daß ein sog. "Fingerprint" für die entsprechende Wasserquelle erstellt werden kann. Sobald sich dieses Muster signifikant ändert, ist dies ein Hinweis auf eine mögliche Verkeimung oder andere ungewollte Veränderung. Auf diese Weise lässt sich das automatische, kontinuierlich messende on-line System vor allem als Warnsystem bzw. als "Trigger" für weitere Untersuchungen einsetzen.

Wird die Quelle der zu untersuchenden Probe 19 häufig gewechselt oder ist sie unbekannt (also vor allem bei off-line Messungen), so kann kein Fingerprint erstellt werden. Hier muss auf die reine Zahl an erkannten Bakterien zurückgegriffen werden. Für die Warnung bietet sich dabei vor allem ein "Ampelsystem" an, wobei beispielsweise grün eine sehr geringe Anzahl von Bakterien anzeigt, rot hingegen eine für den Menschen möglicherweise gefährlich hohe Anzahl, die zu einer sofortigen Sperrung des Wassers (oder des Produkts) führt (Aktionsgrenze). Eine Bakterienkonzentration im Bereich dazwischen wird beispielsweise durch gelb dargestellt, was eine noch ungefährliche Menge symbolisiert, wobei eine Zweitmessung jedoch angezeigt sein kann (Warngrenze).

### Bezugszeichenliste:

- 10: Detektionsvorrichtung
- 12: Partikel
- 14: Detektionseinrichtung
- 16: Fluidikeinrichtung
- 18: Aufbereitungseinrichtung
- 19: Probe
- 20: Mischeinrichtung
- 22: Reservoir
- 24: Probenaufnahmevorrichtung
- 26: Abfallgefäß
- 28: Mehrwegeventil
- 30: Pumpeinrichtung
- 32: Kolbenspritze
- 34: Kolben
- 36: Schneckengetriebe
- 40: Probengefäß
- 42: Probenflüssigkeit
- 44: Reaktionsfluid
- 46: Markerfluid
- 48: Sondenfuid
- 50: Waschflüssigkeit
- 52: Heizeinrichtung
- 54: Teilbereich
- 56: Durchflusszytometer
- 58: Detektionseinrichtungsversorgungsbereich
- 60: Hüllfluidreservoir
- 62: Zuleitung
- 64: Hüllfluid
- 66: Druckluftleitung
- 68: Recyclingeinrichtung
- 69: Ableitung
- 70: Verbindungsleitung
- 72: Pumpe
- 74: Filter
- 76: Aktivkohlefilter
- 78: Porenfilter
- 80: Auswerteeinrichtung
- 82: Mustererkennungseinheit
- 84: Speichereinheit
- 86: Vergleichseinheit
- 88: Steuereinrichtung
- 90: Leitung
- 92: Umschaltverntil
- 94: Detektionsposition
- 96: Probenaufnahmeposition
- 98: Detektionsgefäß
- 100: Anregungsquelle
- 102: Detektoreinheit
- 104: Küvette
- 106: Wand
- 108: Lichtquelle
- 110: Photomultiplier
- 112: Peristaltikpumpe

## Patentansprüche

1. Detektionsvorrichtung (10) zur automatischen Detektion von Partikeln (12), insbesondere biologischen Partikeln (12), in einer Probe (19), aufweisend eine Detektionseinrichtung (14) zum Erfassen der Partikel (12) und eine Fluidikeinrichtung (16) zum automatischen Leiten der Probe (19) zu der Detektionseinrichtung (14), wobei die Fluidikeinrichtung (16) eine Aufbereitungseinrichtung (18) zur automatischen Aufbereitung der Partikel (12) zwecks Detektion aufweist und wobei die Detektionseinrichtung (14) ein Durchflusszytometer (56) zum Erfassen wenigstens eines physikalischen Parameters der aufbereiteten Partikel (12) aufweist.

2. Detektionsvorrichtung (10) nach Anspruch 1,
**dadurch gekennzeichnet, dass** die Aufbereitungseinrichtung (18) eine Mischeinrichtung (20) zum automatischen Mischen der Probe (19) mit wenigstens einem Reaktionsfluid (44) und/oder wenigstens ein Reservoir (22) zur Lagerung des Reaktionsfluids (44) und/oder eine Probenaufnahmevorrichtung (24) zur automatischen Aufnahme der Probe (19) und/oder ein Abfallgefäß (26) zur Aufnahme von Abfallfluid aufweist.

3. Detektionsvorrichtung (10) nach Anspruch 2,
**dadurch gekennzeichnet, dass** die Mischeinrichtung (20) als Pumpeinrichtung (30), insbesondere als kontinuierliche Pumpeinrichtung (30), zum Pumpen, insbesondere kontinuierlichen Pumpen, der Probe (19) und/oder des Reaktionsfluids (44) und/oder einer Mischung aus Probe (19) und Reaktionsfluid (44) durch wenigstens einen Teilbereich (54) der Fluidikeinrichtung (16) ausgebildet ist und/oder dass die Mischeinrichtung (20) eine Heizeinrichtung (52) zum Temperieren der Probe (19) und/oder des Reaktionsfluids (44) und/oder der Mischung aus Probe (19) und Reaktionsfluid (44) aufweist.

4. Detektionsvorrichtung (10) nach Anspruch 3,
**dadurch gekennzeichnet, dass** die Pumpeinrichtung (30) als Kolbenspritze (32) ausgebildet ist, wobei insbesondere ein Schneckengetriebe (36) zum Antreiben des Kolbens (34) vorgesehen ist, und/oder dass die Pumpeinrichtung (30) wenigstens eine Peristaltikpumpe (112) aufweist.

5. Detektionsvorrichtung (10) nach einem der Ansprüche 2 bis 4,
**dadurch gekennzeichnet, dass** das wenigstens eine Reservoir (22) ein Reaktionsfluid (44) aufweist, das gebildet ist durch ein Markerfluid (46), insbesondere ein Farbstofffluid, und/oder durch ein Sondenfluid (48), insbesondere ein Fluid mit Antikörpern und/oder Nukleinsäurefragmenten und/oder Enzymsubstraten.

6. Detektionsvorrichtung (10) nach einem der Ansprüche 2 bis 5,
**dadurch gekennzeichnet, dass** die Fluidikeinrichtung (16) wenigstens ein Mehrwegeventil (28) zum automatischen Verbinden der Mischeinrichtung (20) mit der Probenaufnahmeeinrichtung (24) und/oder dem wenigstens einen Reservoir (22) und/oder der Detektionseinrichtung (14) und/oder dem Abfallgefäß (26) aufweist und/oder dass die Probenaufnahmeeinrichtung (24) ein Umschaltventil (92) zum automatischen Umschalten zwischen einer Probenaufnahmeposition (96) und einer Detektionsposition (94) aufweist.

7. Detektionsvorrichtung (10) nach einem der Ansprüche 1 bis 6,
**dadurch gekennzeichnet, dass** die Detektionseinrichtung (14) ein Detektionsgefäß (98), insbesondere eine trichterförmige Küvette (104), eine Anregungsquelle (100), insbesondere eine Lichtquelle (108), mehr insbesondere einen Laser, und eine Detektoreinheit (102), insbesondere einen Photomultiplier (110), aufweist.

8. Detektionsvorrichtung (10) nach einem der Ansprüche 1 bis 7,
**dadurch gekennzeichnet, dass** die Fluidikeinrichtung (16) einen Detektionseinrichtungsversorgungsbereich (58) mit einem Hüllfluidreservoir (60) und mit einer Zuleitung (62) zum automatischen Leiten von Hüllfluid (64) von dem Hüllfluidreservoir (60) zu der Detektionseinrichtung (14) aufweist, wobei die Zuleitung (62) insbesondere eine Druckluftleitung (66) und/oder eine Peristaltikpumpe (112) aufweist.

9. Detektionsvorrichtung (10) nach einem der Ansprüche 1 bis 8,
**dadurch gekennzeichnet, dass** eine Recyclingeinrichtung (68) zum Recyceln von Abfallfluid vorgesehen ist, die wenigstens einen Filter (74) zum Filtern des Abfallfluids aufweist, wobei die Recyclingeinrichtung (68) insbesondere als Verbindungsleitung (70) zwischen Abfallgefäß (26) und Detektionseinrichtung (14) ausgebildet ist und/oder wobei der Filter (74) insbesondere einen Aktivkohlefilter (76) und/oder einen Porenfilter (78) mit Poren einer Porengröße zwischen 0,1 µm bis 0,3 µm aufweist.

10. Detektionsvorrichtung (10) nach einem der Ansprüche 1 bis 9, **gekennzeichnet durch** eine Steuereinrichtung (88) zum automatischen Ansteuern der Elemente der Fluidikeinrichtung (16) und/oder der Detektionseinrichtung (14) und/oder **gekennzeichnet durch** eine Auswerteeinrichtung (80) zum Auswerten der in der Detektionseinrichtung (14) erfassten physikalischen Parameter der Partikel (12).

11. Detektionsvorrichtung (10) nach Anspruch 10,
**dadurch gekennzeichnet, dass** die Auswerteeinrichtung (80) eine Mustererkennungseinheit (82) zum Erkennen von Mustern von gegeneinander aufgetragenen gemessenen physikalischen Parametern aufweist, die insbesondere eine Speichereinheit (84) zum Speichern von bekannten Mustern und eine Vergleichseinheit (86) zum Vergleichen von bekannten und erkannten Mustern aufweist.

12. Verfahren zur automatischen Detektion von Partikeln (12), insbesondere biologischen Partikeln (12), in einer Probe (19) mit den Schritten:
a) automatische Aufnahme einer Probe (19) mit zu erfassenden Partikeln (12) in eine Fluidikeinrichtung (16);
b) automatische Aufbereitung der Probe (19) in der Fluidikeinrichtung (16);
c) automatisches Leiten der aufbereiteten Probe (19) mittels der Fluidikeinrichtung (16) durch ein Detektionsgefäß (98), wobei ein an Wänden (106) des Detektionsgefäßes (98) fließendes Hüllfluid (64) die aufbereitete Probe (19) umschließt;
d) Erfassen von wenigstens einem physikalischen Parameter der Partikel (12) in der Probe (19).

13. Verfahren nach Anspruch 13,
**dadurch gekennzeichnet, dass** die Aufnahme der Probe (19) und/oder die Aufbereitung der Probe (19) und/oder das Leiten der Probe (19) durch das Detektionsgefäß (98) kontinuierlich erfolgt.

14. Verfahren nach einem der Ansprüche 12 oder 13,
**dadurch gekennzeichnet, dass** die Schritte der Detektion in einer Detektionsvorrichtung (10) durchgeführt werden, wobei die Elemente der Detektionsvorrichtung (10) derart von einer Steueinrichtung (88) angesteuert werden, dass die Schritte der Detektion automatisch erfolgen.

15. Verfahren nach einem der Ansprüche 12 bis 14,
**dadurch gekennzeichnet, dass** in Schritt d) mehrere physikalische Parameter der Partikel (12) erfasst werden, insbesondere Größe, Oberflächenstruktur, Fluoreszens-Intensität, Fluoreszenz-Wellenlänge, wobei in einem Schritt e) Auswerten der erfassten Parameter entweder wenigstens zwei der erfassten Parameter gegeneinander aufgetragen werden, wobei ein Muster der Auftragung erkannt und mit bekannten Mustern verglichen wird oder die Partikel (12) einzeln erfasst werden.
